# EUROPÄISCHE PATENTSCHRIFT

(11) **EP 1 654 148 B1**
(45) Veröffentlichungstag und Bekanntmachung des Hinweises auf die Patenterteilung: **15.08.2007**
(21) Anmeldenummer: 04763043.9
(22) Anmeldetag: 29.06.2004
(51) Int. Cl.: B62D 5/083, B62D 6/02

(54) **RÜCKWIRKUNGSANORDNUNG**
RETROACTIVE DEVICE
DISPOSITIF A RETROACTION

(30) Priorität: 13.08.2003 DE 10337376
(43) Veröffentlichungstag der Anmeldung: 10.05.2006
(73) Patentinhaber: ThyssenKrupp Presta SteerTec GmbH, 40476 Düsseldorf (DE)
(72) Erfinder: BREUNING, Edwin, 73770 Denkendorf (DE); CIOPPI, Carmine, 71384 Weinstadt (DE); STOLZENBURG, Jens, 84360 Ilsfeld (DE)
(74) Vertreter: Lenzing, Andreas
(86) Internationale Anmeldenummer: PCT/EP2004/007035
(87) Internationale Veröffentlichungsnummer: WO 2005/023624

(56) Entgegenhaltungen:
- EP-A- 0 818 380
- EP-A- 0 930 217
- DE-C- 4 330 338
- US-A- 5 070 958
- US-A- 6 009 903
- PATENT ABSTRACTS OF JAPAN Bd. 0113, Nr. 85 (M-651), 16. Dezember 1987 (1987-12-16) & JP 62 152973 A (TOYODA MACH WORKS LTD), 7. Juli 1987 (1987-07-07)
- PATENT ABSTRACTS OF JAPAN Bd. 0113, Nr. 16 (M-631), 15. Oktober 1987 (1987-10-15) & JP 62 099262 A (TOYODA MACH WORKS LTD), 8. Mai 1987 (1987-05-08)
- PATENT ABSTRACTS OF JAPAN Bd. 0111, Nr. 58 (M-591), 22. Mai 1987 (1987-05-22) & JP 61 291270 A (KOYO JIDOKI KK), 22. Dezember 1986 (1986-12-22)

## Beschreibung

Die vorliegende Erfindung betrifft eine Servolenkung mit den Merkmalen des Oberbegriffs des Anspruchs 1 wie in der gattungsgemäßen EP0818380 offenbart.

Eine derartige Anordnung ist auch aus der DE 19616439 C1 bekannt. Bei der bekannten Anordnung wird bei einer Auslenkung der Servoventilanordnung eine zusätzliche, steuerbare Rückstellkraft auf die Lenksäule und damit das Lenkrad eines Kraftfahrzeugs ausgeübt, indem kugelförmige Rückwirkungskörper mit einem steuerbaren hydraulischen Druck in v-förmige Nuten gedrängt werden. In der Mittellage, was bei einer Kraftfahrzeugservolenkung einer im wesentlichen lenkdrehmomentfreien Geradeausfahrt entspricht, ist keine hydraulische Einwirkung auf die Rückwirkungskörper vorgesehen. Grundsätzlich wird diese Mittellage, die für das Fahrgefühl eines Kraftfahrzeugs mitbestimmend ist, durch die Rückstellkraft des Drehstabes der Servoventilanordnung bestimmt. Im gattungsbildenden Stand der Technik ist vorgesehen, dass eine die Rückwirkungskörper von außen umspannende Bandfeder zur mechanischen, elastischen Vorspannung der Rückwirkungskörper in die Nuten vorgesehen sein kann, falls die Mittellage durch die Steifigkeit des Drehstabes allein nicht ausreichend definiert ist. Diese Lösung, mit der der Servoventilanordnung eine mechanische Grundlast in der Mittelstellung aufgeprägt wird, ist in der Praxis nicht befriedigend. Deshalb wird im gattungsbildenden Stand der Technik vorgeschlagen, eine hydraulische Grundlast aufzuprägen, indem ein vorgespanntes Einwegeventil hydraulisch parallel zu den Rückwirkungskörpern angeordnet wird. Diese Anordnung ergibt eine Druckdifferenz zwischen einem Innenraum und einem Außenraum der Rückwirkungsanordnung. Während diese Lösung für Servolenkungen mit Hydraulikpumpen mit konstantem Förderstrom vorgesehen ist, ist sie bei Hydraulikpumpen mit variablem geregeltem Förderstrom nicht anwendbar, da die Rückwirkung mit dem Förderstrom variieren würde.

Andere Rückwirkungsanordnungen sind bekannt aus den US-Patentschriften US 5,046,573, US 5,070,958 und US 5,517,899. Bei diesen Anordnungen erfolgt die Aufprägung des Rückwirkungsmomentes durch Profile, die sich in Axialrichtung des Drehschieberventils erstrecken und in die die Rückwirkungskörper hydraulisch in Axialrichtung gedrängt werden. Bei den beiden erstgenannten Druckschriften wird die Grundlast mittels einer Schraubenfeder und eines zwischen dem druckseitigen Außenraum und dem niederdruckseitigen Innenraum angeordneten Schiebestücks aufgebracht. Das Schiebestück ist dabei als fliegender Kolben ausgeführt, der in Axialrichtung beweglich ist und der einerseits an den Rückwirkungskörpern anliegt und andererseits an der Schraubenfeder. Die Kraft der Schraubenfeder ist dabei additiv zu der hydraulischen Kraft, die auf das Schiebestück und damit auf die Rückwirkungsanordnung wirkt. Eine hydraulische Grundlast ist nicht vorgesehen. Auch diese Lösung, mit der der Servoventilanordnung eine mechanische Grundlast in der Mittelstellung aufgeprägt wird, ist in der Praxis nicht befriedigend.

Es ist deshalb Aufgabe der vorliegenden Erfindung, die bekannte Rückwirkungsanordnung dahingehend zu verbessern, dass eine steuer- oder regelbare Grundlast auch bei variierendem Förderstrom aufgeprägt werden kann.

Diese Aufgabe wird von einer Rückwirkungsanordnung mit den Merkmalen des Anspruchs 1 gelöst.

Weil das wenigstens eine Ventilmittel hydraulisch in Reihe mit der Rückwirkungsanordnung angeordnet ist, kann eine hydraulische Grundlast in der Mittelstellung des Servoventils der Größe nach unabhängig von dem Fördervolumen der Servopumpe erzeugt werden.

Vorteilhaft ist das Ventilmittel ein elektrisch gesteuertes Proportionalventil, da damit die Grundlast mittels einer Steuerung eingestellt werden kann.

Das Ventil kann ein kreiszylindrisches Gehäuse aufweisen, das ein Ventilglied, einen Ventilsitz sowie die Schraubenfeder umschließt und das einen Fluidkanal aufweist. So kann das Ventil als separates Bauteil vorgefertigt und eingesetzt werden.

Eine als vorteilhaft empfundene Lenkcharakteristik ergibt sich, wenn wenigstens zwei Fluidkanäle vorgesehen sind, die bei steigender Druckdifferenz zwischen dem Außenraum und dem Innenraum nacheinander geöffnet werden.

Vorteilhafte Parameter für eine PKW-Lenkung liegen vor, wenn die Druckdifferenz im Bereich der Mittellage des Servoventils etwa 5 - 10 bar, mindestens jedoch 2 bar beträgt, wobei bei Förderströmen zwischen 2 l/min und 9 l/min jede Druckdifferenz im oben genannten Bereich erzielbar sein soll.

Im folgenden wird ein Ausführungsbeispiel der vorliegenden Erfindung anhand der Zeichnung näher beschrieben. Es zeigen:
- Figur 1:: einen Querschnitt durch eine Servoventilanordnung nach dem Stand der Technik in Längsrichtung;
- Figur 2:: einen Querschnitt durch die Servoventilanordnung der Figur 1 entlang der Linie II - II;
- Figur 3:: einen Schaltplan, bei dem ein Rückschlagventil in der Zuleitung des Drehschieberventils angeordnet ist;
- Figur 4:: einen hydraulischen Schaltplan entsprechend Figur 3, bei dem das Rückschlagventil durch ein über eine Blende angeströmtes Vorsteuerventil ersetzt ist; sowie
- Figur 5:: einen hydraulischen Schaltplan gemäß Figuren 3 und 4 mit einem elektrisch gesteuerten Vorsteuerventil.

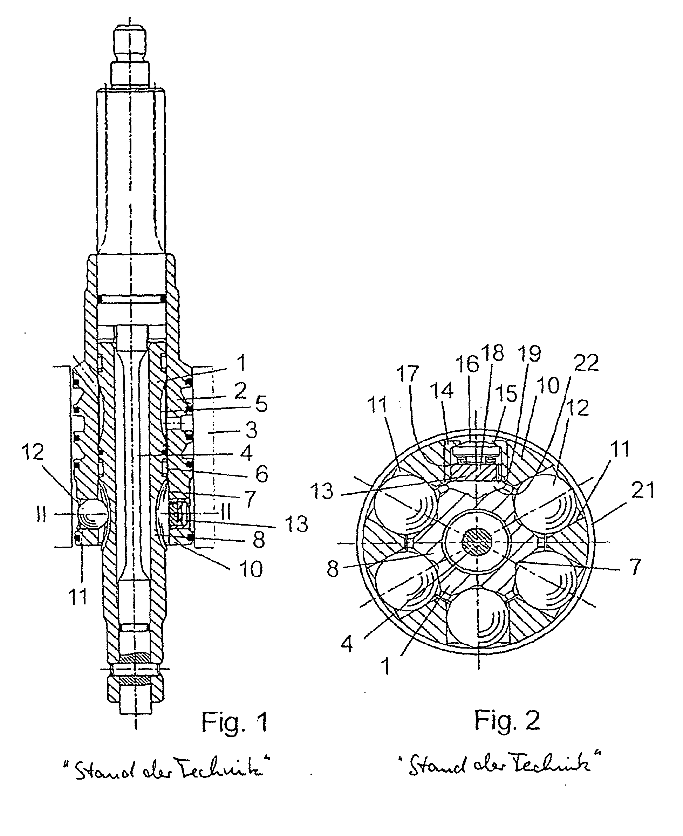

In der Figur 1 ist eine Servoventilanordnung nach dem gattungsbildenden Stand der Technik in einem Querschnitt entlang der Längsachse dargestellt. Ein Drehschieber 1 wird koaxial von einer Steuerbuchse 2 umfasst, die innerhalb eines angedeuteten Ventilgehäuses 3 drehbar gelagert ist. Der Drehschieber 1 und die Steuerbuchse 2 lassen sich entgegen der Federkraft eines Drehstabes 4 begrenzt relativ zueinander verdrehen, wobei miteinander zusammenwirkende, am Drehschieber 1 bzw. der Steuerbuchse 2 angeordnete axiale Steuerkanten 5 relativ zueinander verstellt werden. Dies bewirkt, dass in an sich bekannter Weise zwischen zwei Anschlüssen eines Hydraulikstellantriebs eine Druckdifferenz entsteht, die die unterstützende Hilfslenkkraft einer Servolenkung darstellt.

Der Drehschieber 1 weist in der Figur 1 unterhalb einer Dichtung 6 einen mit im Querschnitt v-förmigen Nuten 7 versehenen Wellenabschnitt 8 auf, der von einem zweiten Buchsenabschnitt 10 umgeben ist. Der Buchsenabschnitt 10 weist insgesamt sechs rotationssymmetrisch um den Drehschieber 1 angeordnete Durchgangsbohrungen 11 auf, in denen teilweise Rückwirkungskörper 12 angeordnet sind. In einer der Bohrungen 11 ist ein Ventil 13 angeordnet. Dieser Bereich ist in der Figur 2 näher dargestellt.

Die Figur 2 zeigt einen Querschnitt entlang der Linie II - II der Figur 1 in einer vergrößerten Darstellung.

Das Ventil 13 weist ein rotationssymmetrisches, kreiszylindrisches Gehäuse 14 auf, in dem ein Ventilsitz 15 einstückig ausgebildet ist. Ein bewegliches Ventilglied 16 wird von einer Schraubenfeder 17 gegen den Ventilsitz 15 gedrängt. Die Schraubenfeder 17 wiederum stützt sich gegen ein Widerlager 18 ab, das mit dem Gehäuse 14 fest verbunden ist und einen Fluidkanal 19 trägt.

Das Ventil 13 trennt gemeinsam mit den Rückwirkungskörpern 12 einen hydraulischen Außenraum 21 von einem hydraulischen Innenraum 22.

Im Betrieb wird über eine nicht dargestellte Steuerung von der Druckseite einer ebenfalls nicht dargestellten Hydraulikpumpe ein Betriebsdruck auf den Außenraum 21 gegeben, der auf die Rückwirkungskörper 12 einwirkt. Die zwischen dem Außenraum 21 und dem Innenraum 22 entstehende Druckdifferenz bewirkt zusammen mit der Querschnittsfläche der Rückwirkungskörper 12 und der Ausgestaltung der Nuten 7 bei der Auslenkung des Drehschieberventils aus der dargestellten Mittelstellung eine Rückstellkraft. In der in Figur 2 dargestellten Mittelstellung bewirkt die Druckdifferenz eine Haltekraft, da alle Rückwirkungskörper 12 an jeweils beiden Flanken der Nuten 7 anliegen und bei jeglicher Verdrehung des Drehschiebers 1 gegenüber der Steuerbuchse 2 entgegen dieser hydraulischen Kraft zu arbeiten ist.

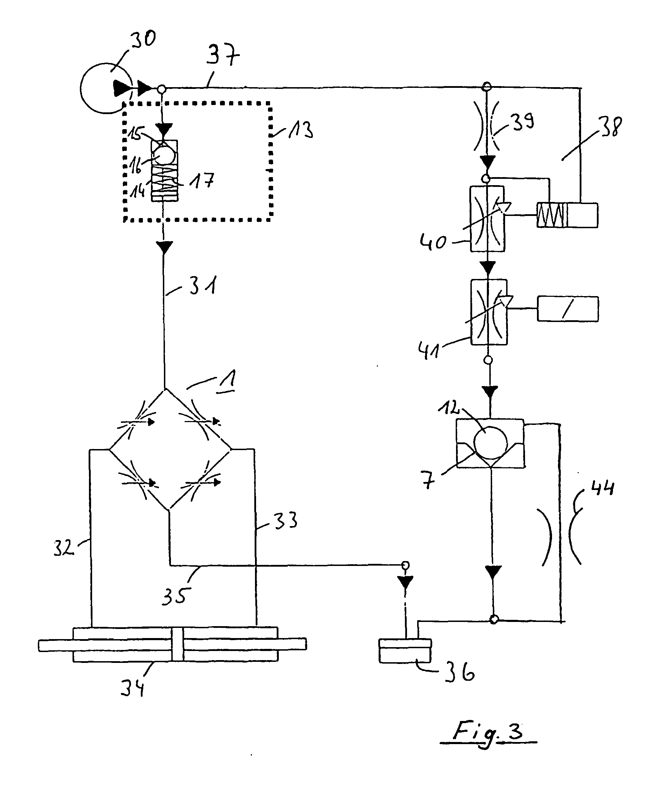

In der Figur 3 ist eine Ausführungsform des Hydraulikschaltplans gezeigt. Gleiche Bezugsziffern bezeichnen gleiche Bauelemente.

Bei dieser Ausführungsform ist das Ventil 13 in der Hydraulikleitung 31 zwischen der Pumpe 30 und dem Drehschieberventil 1 eingeschaltet.

Da es sich bei dem Drehschieberventil 1 um ein Ventil mit offener Mitte (open center) handelt, fließt ein kontinuierlicher Strom von Hydraulikfluid durch das Drehschieberventil 1 von der Leitung 31 zu der Leitung 35 und damit in den Vorratsbehälter 36. Das Ventil 13 bewirkt, dass sich druckseitig vor dem Ventil 13 ein Hydraulikdruck aufbaut, der dann in der Hydraulikleitung 37 ansteht. Die Hydraulikleitung 37 führt zu dem Abschneidregelschieber 38 und dem Proportionalventil 41, die für die Druckbegrenzung bzw. die Größe des auf den Rückwirkungskörper 12 wirkenden Drucks vorgesehen sind. Parallel zu dem Rückwirkungskörper 12 und seiner V-förmigen Arbeitsnut 7 ist eine Drosselbohrung 44 vorgesehen. Diese Drosselbohrung versorgt einen kontinuierlichen Hydraulikstrom parallel zu den Rückwirkungskörpern 12. Auf diese Weise wird ein definierter Leckstrom erzeugt, der Toleranzen in der Passung der Rückwirkungskörper 12, die in den Durchgangsbohrungen 11 sitzen, hinsichtlich ihrer hydraulischen Einwirkung eliminiert.

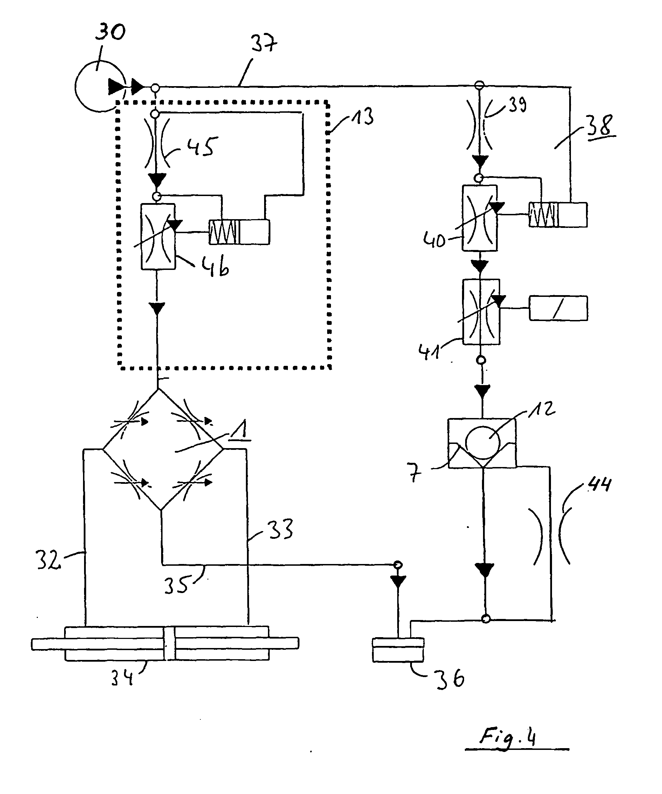

Die Figur 4 zeigt wiederum einen Hydraulikschaltplan ähnlich Figur 3. Bei dieser Ausführungsform ist das Ventil 13 als hydraulisch vorgesteuertes Druckregelventil ausgeführt. Der Querschnitt des Ventils 13 wird über den vor einer Durchgangsbohrung 45 anstehenden Hydraulikdruck über das Vorsteuerventil 46 geregelt. Die Funktion der Anordnung gemäß Figur 4 entspricht derjenigen gemäß Figur 3. Allerdings ist ein konstanter Vordruck in der Hydraulikleitung 37 in einem größeren Bereich möglicher Durchflussmengen durch das Drehschieberventil 1 gewährleistet, als es in der Figur 3 der Fall wäre.

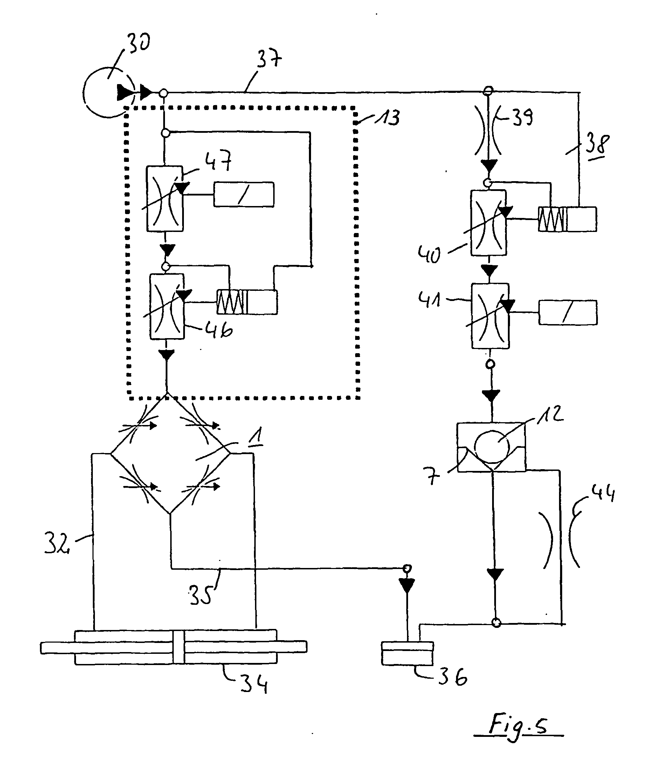

Eine weitere verbesserte Ausführungsform ist in der Figur 5 dargestellt. Dort ist das Ventil 13 als elektrisch vorgesteuertes Druckregelventil ausgeführt. Ein elektrisch ansteuerbares Proportionalventil 47 stellt den in der Hydraulikleitung 37 von der Pumpe 30 kommenden primären Druck ein, der auf die Steuerseite des Vorsteuerventils 46 wirkt. Auf diese Weise ist über das elektrische Proportionalventil 36 der Druck in der Hydraulikleitung 37 und damit vor der Ventilanordnung 38 regelbar. Die Rückstellkraft der Servolenkung kann damit je nach Betriebszustand des Kraftfahrzeugs geregelt werden. Bei entsprechender Ausführung der nicht dargestellten Elektronik kann auch eine Auswahl der Höhe der Rückstellkräfte von dem Fahrer vorgenommen werden. Das "Fahrgefühl", das eine entsprechend geschaltete Servolenkung dem Fahrer vermittelt, ist dann einstellbar und wählbar.

Das in den Figuren 3 bis 5 dargestellte hydraulische Layout ermöglicht es weiter, die Rückwirkung über die Rückwirkungskörper 12 und den Drehschieber auf das Lenkrad zu steuern oder zu regeln, und zwar weitgehend unabhängig von der Förderleistung der Hydraulikpumpe 30. Die Leistung der Pumpe, die bei herkömmlichen open-center-Lenkungen im wesentlichen konstant ist, kann bei Lenkungen nach den Figuren 3 bis 5 bedarfsabhängig geregelt werden, ohne dass das Rückstellmoment unerwünscht absinkt. Eine solche Leistungsregelung der Pumpe 30 ist zur Senkung des Kraftstoffverbrauchs dann vorteilhaft, wenn bei Geradeausfahrt keine oder nur geringe Servounterstützung erforderlich ist. Die Rückwirkung soll aber gerade dann besonders groß sein. Dies wird durch die Ventilanordnungen der Figuren 3 bis 5 ermöglicht.

Eine Servolenkung, die mit einer Rückwirkungsanordnung entsprechend der vorliegenden Erfindung ausgestattet ist, vermittelt in der Praxis ein vorteilhaftes Fahrgefühl auch bei Verwendung von geregelten Hydraulikpumpen.

Die Rückwirkungsanordnung ist insbesondere auch bei den eingangs als Stand der Technik genannten Servolenkungen anwendbar.

## Patentansprüche

1. Hydraulische Servolenkung für Kraftfahrzeuge, mit
- einer hydraulischen Servoventilanordnung, mit
- einer Rückwirkungsanordnüng, und mit
- einer hydraulischen Servopumpe, die über eine erste Hydraulikleitung das Servoventil und über eine zweite Hydraulikleitung die Rückwirkungsanordnung speist,
- wobei die Rückwirkungsanordnung Mittel zur hydraulischen Erzeugung eines Rückstellmomentes in eine Mittelstellung aufweist, die das Rückstellmoment in Abhängigkeit von der Druckdifferenz zwischen einer Druckseite und einer Niederdruckseite erzeugt,
- wobei weiter wenigstens ein Ventilmittel vorgesehen ist, das bei Druckbeaufschlagung in der Mittelstellung des Servoventils zur Erzeugung einer Druckdifferenz zwischen der Druckseite und der Niederdruckseite der Rückwirkungsanordnung eingerichtet ist, , **dadurch gekennzeichnet, dass** das wenigstens eine Ventilmittel ein in der ersten Hydraulikleitung in Reihe mit dem Servoventil angeordnetes Druckregelventil (13; 45, 46, 47) ist und dass hydraulisch in Reihe mit der Rückwirkungsanordnung ein Druckbegrenzungsventil (38; 39, 40) und ein Proportionalventil (41) in der zweiten Hydraulikleitung (37) angeordnet sind.

2. Hydraulische Servolenkung nach Anspruch 1, **dadurch gekennzeichnet, dass** die Mittel zur Erzeugung eines Rückstellmomentes eine drehschieberseitige Nutenanordnung (7) und einen steuerbuchsenseitigen Buchsenabschnitt (10) umfassen, wobei der Buchsenabschnitt den hydraulischen Außenraum von dem hydraulischen Innenraum trennt und wobei der Buchsenabschnitt (10) Radialführungen für Rückwirkungskörper (12) aufweist, die unter einem radial von dem Außenraum her einwirkenden Hydraulikdruck bei einer Auslenkung des Servoventils aus einer Mittellage zur Erzielung eines Rückwirkungsdrehmoments in die Nuten drängbar sind.

3. Hydraulische Servolenkung nach Anspruch 1 oder 2, **dadurch gekennzeichnet, dass** die Druckdifferenz im Betrieb in der Mittellage des Servoventils etwa 5 bis 10 bar, mindestens jedoch 2 bar beträgt.

4. Hydraulische Servolenkung nach Anspruch 1 oder 2, **dadurch gekennzeichnet, dass** das Ventilmittel (13) ein hydraulisch vorgesteuertes Druckregelventil (45, 46) ist.

5. Hydraulische Servolenkung nach Anspruch 1 oder 2, **dadurch gekennzeichnet, dass** das Ventilmittel (13) ein elektrisch vorgesteuertes Druckregelventil (46, 47) ist.

6. Hydraulische Servolenkung nach einem der vorhergehenden Ansprüche, **dadurch gekennzeichnet, dass** den Rückwirkungskörpern (12) ein Abschneidregelschieber (38 - 40) vorgeschaltet ist.

7. Hydraulische Servolenkung nach einem der vorhergehenden Ansprüche, **dadurch gekennzeichnet, dass** den Rückwirkungskörpern (12) ein elektrisch ansteuerbares Proportionalventil (41) vorgeschaltet ist.

## Claims

1. Hydraulic power steering system for motor vehicles, having
- a hydraulic servo valve arrangement, having
- a reaction arrangement, and having
- a hydraulic power-steering pump, which via a first hydraulic line supplies the servo valve and via a second hydraulic line supplies the reaction arrangement,
- wherein the reaction arrangement comprises means of hydraulically generating a restoring torque into a central position, which generates the restoring torque in dependence upon the pressure difference between a discharge end and a low-pressure side,
- wherein moreover at least one valve means is provided, which in the event of pressurization in the central position of the servo valve is set up to generate a pressure difference between the discharge end and the low-pressure side of the reaction arrangement, **characterized in that** the at least one valve means is a pressure regulating valve (13; 45, 46, 47), which is disposed in series with the servo valve in the first hydraulic line, and that a pressure control valve (38; 39, 40) and a proportional valve (41) are disposed hydraulically in series with the reaction arrangement in the second hydraulic line (37).

2. Hydraulic power steering system according to claim 1, **characterized in that** the means of generating a restoring torque comprise a rotary-slide-valve-side groove arrangement (7) and a control-bush-side bush portion (10), wherein the bush portion separates the hydraulic outer space from the hydraulic inner space and wherein the bush portion (10) has radial guides for reaction bodies (12), which in the event of a deflection of the servo valve from the central position in order to generate a reaction torque are pressable into the grooves under a hydraulic pressure acting radially from the direction of the outer space.

3. Hydraulic power steering system according to claim 1 or 2, **characterized in that** the pressure difference during operation in the central position of the servo valve is approximately 5 to 10 bar, but at least 2 bar.

4. Hydraulic power steering system according to claim 1 or 2, **characterized in that** the valve means (13) is a hydraulically pre-controlled pressure regulating valve (45, 46).

5. Hydraulic power steering system according to claim 1 or 2, **characterized in that** the valve means (13) is an electrically pre-controlled pressure regulating valve (46, 47).

6. Hydraulic power steering system according to one of the preceding claims, **characterized in that** a cutoff control slide valve (38 - 40) is inserted upstream of the reaction bodies (12).

7. Hydraulic power steering system according to one of the preceding claims, **characterized in that** an electrically controllable proportional valve (41) is inserted upstream of the reaction bodies (12).

## Revendications

1. Direction assistée hydraulique pour véhicules automobiles, comportant
- un dispositif de servovalve hydraulique, avec
- un dispositif à rétroaction, et avec
- une servopompe hydraulique qui alimente la servovalve via une première conduite hydraulique et le dispositif à rétroaction via une deuxième conduite hydraulique,
- dans laquelle le dispositif à rétroaction présente des moyens pour engendrer hydrauliquement un couple de rappel jusque dans une position médiane, qui engendrent le couple de rappel en fonction de la différence de pression entre un côté pression et un côté basse pression,
- dans laquelle il est prévu encore au moins un moyen formant valve qui, lors de la sollicitation en pression, est disposé dans la position médiane de la servovalve pour engendrer une différence de pression entre le côté pression et le côté basse pression du dispositif de rétroaction,
**caractérisée en ce que** ledit au moins un moyen formant valve est une soupape régulatrice de pression (13 ; 45, 46, 47) agencée en série avec la servovalve dans la première conduite hydraulique et **en ce qu'**une soupape de limitation de pression (38 ; 39, 40) et une soupape proportionnelle (41) sont agencées dans la deuxième conduite hydraulique (37) en série du point de vue hydraulique avec le dispositif de rétroaction.

2. Direction assistée hydraulique selon la revendication 1, **caractérisé en ce que** les moyens pour engendrer un couple de rappel comprennent un agencement de gorges (7) côté tiroir rotatif et un tronçon à douille (10) côté douille de commande, le tronçon de douille séparant l'espace extérieur hydraulique vis-à-vis de l'espace intérieur hydraulique et le tronçon de douille (10) présentant des guidages radiaux pour des corps de rétroaction (12) qui peuvent être poussés dans les gorges sous une pression hydraulique agissant radialement depuis l'espace extérieur lors d'une déviation de la servovalve depuis une position médiane pour obtenir un couple de rotation de rétroaction.

3. Direction assistée hydraulique selon la revendication 1 ou 2, **caractérisée en ce que** la différence de pression en fonctionnement dans la position médiane de la servovalve est approximativement de 5 à 10 bar, toutefois au moins de 2 bar.

4. Direction assistée hydraulique selon la revendication 1 ou 2, **caractérisée en ce que** le moyen formant valve (13) est une soupape régulatrice de pression (45, 46) pilotée hydrauliquement.

5. Direction assistée hydraulique selon la revendication 1 ou 2, **caractérisée en ce que** le moyen formant valve (13) est une soupape régulatrice de pression (46, 47) pilotée électriquement.

6. Direction assistée hydraulique selon l'une des revendications précédentes, **caractérisé en ce qu'**un tiroir de réglage à découpe (38 à 40) est monté en amont des corps de rétroaction (12).

7. Direction assistée hydraulique selon l'une des revendications précédentes, **caractérisé en ce qu'**une soupape proportionnelle à pilotage électrique (41) est montée en amont des corps de rétroaction (12).
